# FASCICULE DE BREVET EUROPEEN

(11) **EP 3 443 405 B1**
(45) Date de publication et mention de la délivrance du brevet: **02.03.2022**
(21) Numéro de dépôt: 17718050.2
(22) Date de dépôt: 12.04.2017
(51) Int. Cl.: G02B 27/01

(54) **AFFICHEUR TÊTE HAUTE**
HEAD-UP-ANZEIGE
HEAD-UP DISPLAY

(30) Priorité: 12.04.2016 FR 1600625
(43) Date de publication de la demande: 20.02.2019
(73) Titulaire: Valeo Comfort and Driving Assistance, 94046 Créteil Cedex (FR)
(72) Inventeur: GRANDCLERC, François, 94046 Créteil CEDEX (FR); MERMILLOD, Pierre, 94046 Créteil CEDEX (FR); DELPIERRE,Laurent, 94046 Créteil CEDEX (FR)
(74) Mandataire: Delplanque, Arnaud
(86) Numéro de dépôt international: PCT/EP2017/058880
(87) Numéro de publication internationale: WO 2017/178565

(56) Documents cités:
- EP-A1- 0 679 549
- EP-A1- 2 930 048
- EP-A1- 3 220 186
- WO-A1-2015/015807
- WO-A1-2015/064497
- WO-A1-2015/146261
- WO-A2-2013/089276
- DE-B3-102014 002 613

## Description

### DOMAINE TECHNIQUE AUQUEL SE RAPPORTE L'INVENTION

La présente invention concerne de manière générale le maintien des éléments compris dans les dispositifs de projection d'image utilisés notamment dans les afficheurs tête haute pour véhicule.

Elle concerne en particulier une pièce de support pour dispositif de projection d'images comprenant une unité de génération d'images, et une unité de renvoi des images générées.

Elle concerne également un dispositif de projection d'images comprenant une telle pièce de support et un afficheur tête haute comprenant un tel dispositif de projection d'images.

### ARRIERE-PLAN TECHNOLOGIQUE

Le principe des afficheurs tête haute pour véhicule est de projeter des images, notamment utiles à la conduite, directement dans le champ de vision d'un conducteur.

En général, les afficheurs tête haute comprennent un combineur placé dans le champ de vision du conducteur, et un dispositif de projection d'images formé par une unité de génération d'images adaptée à générer des images, et par une unité de renvoi des images générées adaptée à renvoyer ces images vers le combineur.

On connaît un afficheur tête haute, dont le combineur est le parebrise du véhicule, et dont le dispositif de projection d'images est formé par un écran à cristaux liquides rétroéclairé par plusieurs sources lumineuses de type LED, et par un miroir réfléchissant.

Dans ce dispositif, l'écran et les sources lumineuses sont maintenues solidairement par une pièce métallique rapportée sur un boîtier global protégeant le dispositif de projection d'images.

Le miroir réfléchissant est quant à lui monté sur un axe de rotation fixé dans ledit boîtier global. Grâce à l'axe de rotation prévu, il est possible d'ajuster la zone du champ de vision du conducteur dans laquelle sont projetées les images.

Pour former des images de qualité dans le champ de vision du conducteur, il est nécessaire de positionner correctement, l'une par rapport à l'autre, l'unité de génération d'images et l'unité de renvoi des images générées, notamment en alignant précisément les axes optiques respectifs de l'écran et du miroir réfléchissant.

Ce montage est complexe car il nécessite la fixation, dans le boîtier global, de l'écran, des sources lumineuses, et du miroir réfléchissant.

De plus, ce montage rend difficile l'alignement de l'écran et du miroir réfléchissant.

Enfin, ce montage est trop encombrant pour permettre l'utilisation d'un combineur rétractable tel qu'une lame semi-transparente adaptée à s'escamoter dans le boîtier global lorsqu'un conducteur fait le choix de ne pas utiliser l'afficheur tête haute.

Le document DE 10 2014 002 613 B3 divulgue un afficheur utilisant une pièce de support.

### OBJET DE L'INVENTION

Afin de remédier aux inconvénients précités de l'état de la technique, la présente invention propose un dispositif de projection d'images selon la revendication 1.

Plus particulièrement, on propose selon l'invention une pièce de support telle que décrite en introduction, comportant des moyens de support de ladite unité de génération d'images du dispositif de projection d'images et des moyens de support de ladite unité de renvoi des images générées du dispositif de projection d'images.

Ainsi, grâce à l'invention, le montage des unités de génération d'images et de renvoi des images générées au sein du dispositif de projection d'images est facilité.

En outre, la pièce de support selon l'invention assure que lesdites unités de génération d'images et de renvoi des images générées sont convenablement positionnées l'une par rapport à l'autre pour former des images de qualité.

D'autres caractéristiques non limitatives et avantageuses de la pièce de support conforme à l'invention sont les suivantes :
- elle est adaptée à maintenir ladite unité de génération d'images à distance des parois d'un logement de protection dans lequel est logé ledit dispositif de projection d'images ;
- elle comporte en outre un moyen de dissipation thermique ;
- ladite pièce de support est métallique ;
- elle comporte des moyens de fixation dans un logement de protection dudit dispositif de projection d'images ;
- lesdits moyens de fixation comprennent deux pattes verticales adaptées à coulisser dans une glissière dudit logement de protection du dispositif de projection d'images ;
- les moyens de fixation comprennent deux pattes horizontales adaptées à être fixées dans le fond dudit logement de protection du dispositif de projection d'images.

Le dispositif de projection d'images pour afficheur tête haute comprend :
- une unité de génération d'images, et
- une unité de renvoi des images générées.

L'invention trouve une application particulièrement intéressante dans un afficheur tête haute comprenant un tel dispositif de projection d'images et dans lequel l'unité de renvoi d'images est adaptée à renvoyer en direction d'un combineur les images générées par l'unité de génération d'images.

L'afficheur tête haute selon l'invention peut en outre éventuellement présenter les caractéristiques avantageuses suivantes :
- le combineur est une lame semi-transparente rétractable dans un logement de protection dudit dispositif de projection d'images ;
- le combineur est adapté à adopter une position déployée dans laquelle il fait saillie par rapport par rapport audit logement de protection du dispositif de projection d'images, et une position rétractée dans laquelle il est placé entre une paroi dudit logement de protection du dispositif de projection d'images et ladite pièce de support.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique de principe d'un afficheur tête haute selon l'invention en position dans un véhicule ;
- la figure 2 est une vue schématique en perspective éclatée d'un afficheur tête haute selon l'invention ;
- la figure 3 est une vue schématique en coupe de l'afficheur tête haute de la figure 2 assemblé ;
- la figure 4 est une vue de côté d'un dispositif de projection d'images selon l'invention utilisé dans l'afficheur tête haute de la figure 2 ;
- la figure 5 est une vue éclatée de trois-quarts d'une partie du dispositif de projection d'images de la figure 4 ;
- la figure 6 est une vue en perspective arrière d'un premier mode de réalisation d'une pièce de support selon l'invention pour le dispositif de projection d'images de la figure 4 ;
- la figure 7 est une vue en perspective avant d'un deuxième mode de réalisation d'une pièce de support non couvert par l'invention ; et
- la figure 8 est une autre vue en perspective arrière de la pièce de support de la figure 7.

Dans la suite de la description, les termes « avant » et « arrière » seront utilisés pour désigner les éléments en position dans le véhicule automobile, par rapport à la direction longitudinale dudit véhicule automobile. L'avant désignera le côté d'un élément dirigé vers le conducteur, autrement dit le côté tourné vers le coffre, et l'arrière désignera le côté de cet élément tourné vers le capot.

De la même manière, les termes « inférieur » et « supérieur » seront utilisés pour désigner les éléments en position dans le véhicule automobile, par rapport à la direction verticale dudit véhicule automobile. La partie inférieure d'un élément désignera la partie de cet élément qui est située du côté du plancher du véhicule et la partie supérieure désignera la partie de cet élément qui est située du côté du toit.

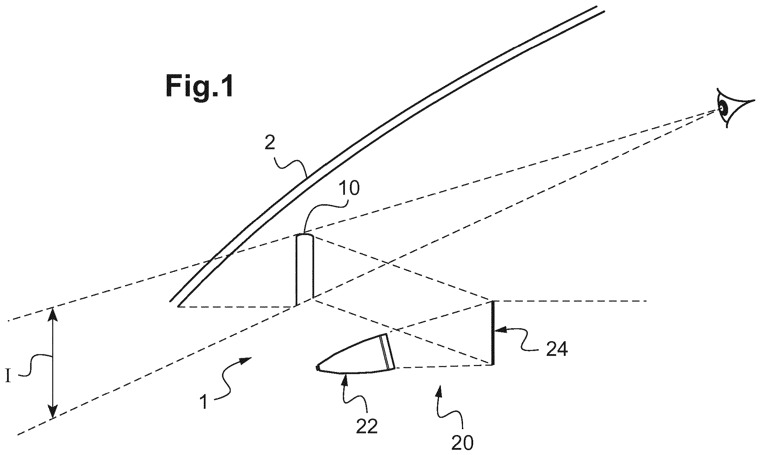

Sur la figure 1, on a représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard.

A cet effet, l'afficheur 1 comprend un combineur 10 placé dans le champ de vision du conducteur (voir figure 1), et un dispositif de projection 20 d'images adapté à générer une image et à l'envoyer en direction dudit combineur 10.

Plus précisément, le dispositif de projection 20 d'images comprend une unité de génération 22 d'images adaptée à générer des images et une unité de renvoi 24 des images adaptée à recevoir les images de l'unité de génération 22 et à les renvoyer en direction du combineur 10.

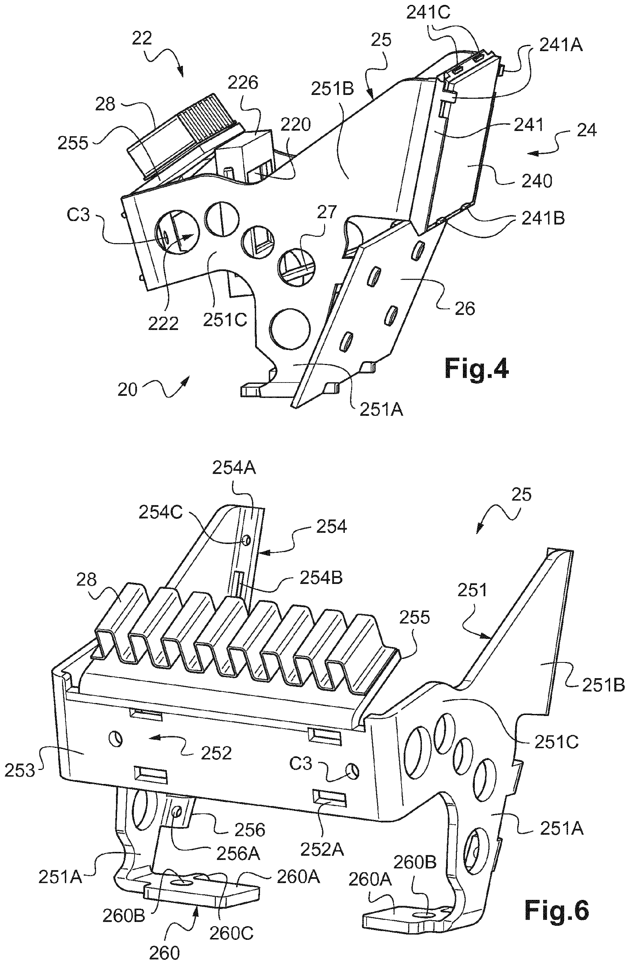

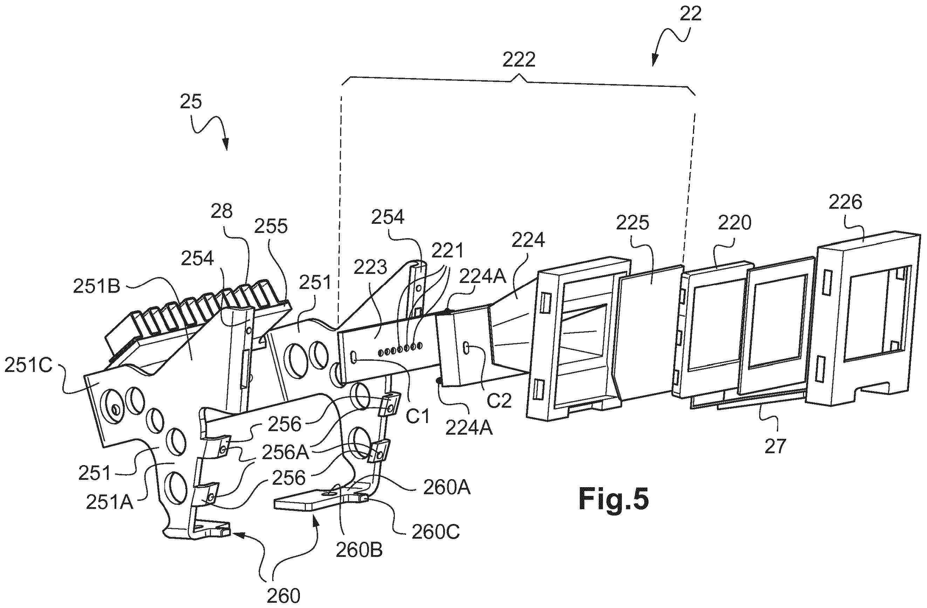

Sur les figures 4 et 5, on a représenté plus précisément le dispositif de projection 20 d'images de l'afficheur tête haute 1.

Telle que représentée sur la figure 4, l'unité de renvoi 24 du dispositif de projection 20 comprend un miroir de repliement 240. Ici, le miroir de repliement 240 est un miroir plan.

L'unité de renvoi 24 comprend également un support de fixation 241 dudit miroir de repliement 240. Ce support de fixation 241 est muni de pattes de serrage 241A flexibles et de griffes 241B adaptées à retenir sur ledit support de fixation 241 le miroir de repliement 240.

Le support de fixation 241 comprend en outre des pattes d'encliquetage 241C prévues pour fixer ledit support de fixation 241 à un conduit 40 de protection de l'unité de renvoi 24.

Le support de fixation 241 comprend enfin d'autres pattes d'encliquetage (non visible sur les dessins) prévues pour fixer ledit support de fixation 241 dans le dispositif de projection 20.

En variante, l'unité de renvoi des images générées pourrait comprendre une pluralité de miroirs et/ou d'autres éléments optiques.

Comme on peut le voir sur la figure 5, l'unité de génération 22 du dispositif de projection 20 comprend ici un écran 220 rétroéclairé par un module de rétroéclairage 222.

L'écran 220 est un écran à cristaux liquides (ou LCD pour "*Liquid Crystal Display*"), par exemple à transistors en couche mince (ou TFT pour *"Thin-Film Transistor*")*.*

Le module de rétroéclairage 222 comprend un ensemble de sources de lumière 221 montées sur un support 223, et un réflecteur 224 associé à un diffuseur 225. Le diffuseur 225 est ici placé sur l'extrémité avant du réflecteur 224, et le support 223 des sources de lumière 221 est placé sur extrémité arrière du réflecteur 224 de manière à ce que l'ensemble composé du support 223, du réflecteur 224, et du diffuseur 225 forme une enceinte fermée.

Les sources de lumière 221 sont ici des diodes électroluminescentes (ou LED pour « Light Emitting Diode ») montées sur un circuit imprimé jouant le rôle de support 223.

Ces sources de lumière 221 sont ici disposées selon une unique rangée d'une pluralité de sources de lumières 221 comprenant ici sept sources de lumière 221. En variante, elles pourraient en comprendre un nombre différent, par exemple un nombre compris entre 2 et 10.

Le support 223 comprend des moyens de centrage C1 du réflecteur 224 sur ledit support 223. Ici, ces moyens de centrage C1 sont des trous circulaires adaptés à recevoir des pions de centrage, tels que des rivets ou des boulons munis de leur écrou.

Le réflecteur 224 peut être vu comme une boîte optique dont les parois sont illuminées sur leur face interne par l'ensemble des sources de lumière 221. Le réflecteur 224 est adapté à réfléchir la lumière de façon optimale pour que la luminosité soit homogène au niveau du diffuseur 225.

Le réflecteur 224 comprend lui aussi des moyens de centrage C2 sur le support 223 sous forme de trous circulaires adaptés à correspondre avec les moyens de centrage C1 du support 223.

Le réflecteur 224 comprend de plus des pattes d'encliquetage 224A prévues pour fixer ledit réflecteur 224 dans le dispositif de projection 20 d'images.

Le diffuseur 225 peut être réalisé au moyen d'un film ayant une face lisse tournée vers les sources de lumière 221 et une face grainée opposée, tournée vers l'écran 220, qui produit la diffusion de la lumière.

L'écran 220 est placé au contact du diffuseur 225, avec son plan d'extension parallèle à celui dudit diffuseur 225.

Un cache 226 est placé par-dessus l'écran 220 de manière à recouvrir les bords dudit écran 220. Ainsi, l'écran 220 et le diffuseur 225 sont maintenus en sandwich entre le cache 226 et le réflecteur 224.

En variante, l'unité de de génération d'images pourrait comprendre un diffuseur et une unité de balayage qui génèrerait un faisceau lumineux de direction variable pour balayer une des faces dudit diffuseur.

L'unité de balayage comprendrait alors un module de formation d'un faisceau lumineux, par exemple formé de trois sources lumineuses monochromatiques, et un miroir mobile par exemple réalisé sous la forme d'un microsystème électromécanique (ou MEMS pour "*MicroElectroMechanical System*").

Par ailleurs, ici, l'unité de génération 22 d'images est commandée par un circuit imprimé 26, connecté électriquement à ladite unité de génération 22 par un connecteur 27 (voir figure 4).

Le circuit imprimé 26 porte notamment des circuits d'alimentation de l'écran 220 de l'unité de génération 22 d'images et des circuits de commande de ce même écran 220, et le circuit imprimé 26 est donc directement relié à l'écran 220.

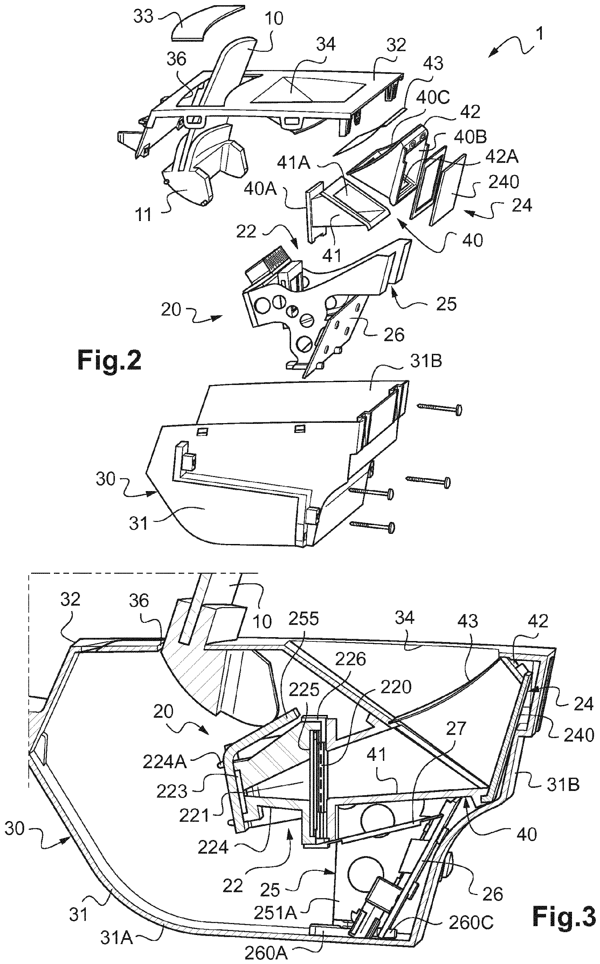

De manière avantageuse, le conduit 40 de protection déjà mentionné relie lesdites unités de génération et de renvoi 22, 24 d'images entre elles (voir figure 2).

Ce conduit 40 de protection forme un tunnel dont une paroi est évidée, de manière à relier l'écran 220 et le miroir de repliement 240 d'une part, et à laisser sortir les images en direction du combineur 10 d'autre part.

Plus précisément, lorsque le conduit 40 est en position dans le dispositif de projection 20, une ouverture arrière 40A du conduit 40 est jointive avec l'écran 220, une ouverture avant 40B du conduit 40 est jointive avec le miroir de repliement 240, et une fenêtre de sortie 40C est prévue sur une face supérieure dudit conduit 40 pour laisser sortir les images vers le combineur 10.

Autrement dit, dans l'afficheur tête haute 1, l'unité de génération 22 des images est adaptée à envoyer les images générées vers l'unité de renvoi 24 des images, à travers le conduit 40 de protection, et l'unité de renvoi 24 des images est adaptée à renvoyer les images générées vers le combineur 10, à travers ladite fenêtre de sortie 40C du conduit 40 de protection.

Tel que représenté sur la figure 2, le conduit 40 comprend deux pièces principales : une première pièce 41 d'entrée des images et une deuxième pièce 42 de sortie desdites images.

Plus précisément, la première pièce 41 présente une forme globalement trapézoïdale allongée, qui comprend quatre parois latérales pleines dont les bords libres arrière forment ladite ouverture arrière 40A du conduit 40, et dont les bords libres avant forment une ouverture intermédiaire 41A située en regard de ladite ouverture arrière 40A. L'ouverture arrière 40A délimite un plan globalement perpendiculaire à un axe longitudinal du volume trapézoïdal, et l'ouverture intermédiaire 41A délimite un plan oblique par rapport audit axe longitudinal.

La première pièce 41 du conduit 40 comprend, au niveau de l'ouverture arrière 40A, des moyens de jonction à l'écran 220, et, au niveau de l'ouverture intermédiaire 41A, des moyens de jonction à la deuxième pièce 42 du conduit 40.

Les moyens de jonction de la première pièce 41 à la deuxième pièce 42 sont des retours qui s'étendent sur tout le contour de l'ouverture intermédiaire 41A pour former un rebord continu.

Les moyens de jonction de la première pièce 41 sur l'écran 220 sont également des retours qui forment un rebord plan sur tout le contour de l'ouverture arrière 40A. Le rebord plan est conçu pour être jointif avec le cache 226 de l'unité de génération 22 d'images.

Ces moyens de jonction peuvent constituer des moyens de fixation du conduit 40 à l'unité de génération 22 d'images.

La deuxième pièce 42 présente elle aussi une forme globalement trapézoïdale qui comprend quatre parois latérales, dont trois adjacentes sont pleines. Les bords libres arrière de ces quatre parois latérales forment ladite ouverture avant 40B du conduit 40, et les bords libres arrière desdites parois latérales forment une autre ouverture intermédiaire 42A située en regard par rapport à l'ouverture avant 40B.

L'ouverture intermédiaire 42A de la deuxième pièce 42 délimite un plan oblique correspondant parfaitement avec le plan oblique de l'ouverture intermédiaire 41A de la première pièce 41, de sorte les première et deuxième pièces 41, 42 sont parfaitement jointives au niveau de leurs ouvertures intermédiaires 41A, 42A.

L'ouverture avant 40B du conduit 40 délimite un plan adapté à se confondre avec le plan du miroir de repliement 240 lorsque le dispositif de projection 20 est assemblé.

Une des parois latérales de la deuxième pièce 42 est en partie évidée de manière à former la fenêtre de sortie 40C dudit conduit 40.

Ici, la fenêtre de sortie 40C dudit conduit 40 est située sur la paroi supérieure de ladite deuxième pièce 42.

La fenêtre de sortie 40C du conduit 40 délimite une surface incurvée dont la concavité est tournée vers l'extérieur, et qui est globalement dirigée vers l'arrière dudit conduit 40.

La deuxième pièce 42 comprend, au niveau de son ouverture intermédiaire 42A, des moyens de jonction à la première pièce 41, et, au niveau de ladite ouverture avant 40B du conduit 40, des moyens de fixation au miroir de repliement 240.

Les moyens de jonction de la deuxième pièce 42 à la première pièce 41 sont des retours qui s'étendent sur tout le contour de l'ouverture intermédiaire 42A pour former un rebord continu conçu pour être jointif au rebord continu de la première pièce 41.

Les moyens de fixation de la deuxième pièce 42 au miroir de repliement 240 sont des encoches de réception de clips prévus à cet effet dans le support de fixation 241 de l'unité de renvoi 24 d'images.

Ces moyens de fixation constituent des moyens de fixation du conduit 40 à l'unité de renvoi 24 des images.

De manière avantageuse, la fenêtre de sortie 40C du conduit 40 est fermée par un film protecteur 43.

Ainsi, en position dans le dispositif de projection 20, le conduit 40 forme une enceinte close, fermée du côté arrière par l'écran 220, du côté avant par le miroir de repliement 240 et enfin par le film protecteur 43 au niveau de la fenêtre de sortie 40C.

Ce conduit 40 est ainsi adapté à protéger les éléments optiques des unités de génération et de renvoi 22, 24 d'images de la poussière et de l'humidité.

Par ailleurs, avantageusement, le film protecteur 43 est adapté à être assemblé au conduit 40 par soudure ultra-son sur les bords de la fenêtre de sortie 40C, de sorte que ce film protecteur 43 est parfaitement jointif au conduit 40.

Pour ce faire, la matière utilisée pour réaliser le conduit 40 est rigide, de sorte que le film protecteur 43 puisse être positionné correctement sur le conduit 40 avant la soudure par ultra-son.

De manière avantageuse, le film protecteur 43 est au moins partiellement transparent, c'est-à-dire adapté à laisser passer les images réfléchies par le miroir de repliement 240 en direction du combineur 10.

En outre, le film protecteur 43 est adapté à réfléchir les rayons lumineux extérieurs au conduit 40.

Plus précisément, la forme de la surface du film protecteur 43 le rend adapté à réfléchir les rayons extérieurs au conduit 40.

Par exemple, le film protecteur 40 présente une forme incurvée dont la concavité est tournée vers l'extérieur dudit conduit 40. Cela permet de limiter la quantité de lumière parasite provenant du soleil.

En variante, on peut envisager que le film protecteur soit recouvert d'un traitement antireflet sur sa face extérieure, c'est-à-dire sur sa face tournée vers l'extérieur du conduit.

De plus, le conduit 40 est avantageusement réalisé en une matière opaque, ce qui permet d'isoler les unités de génération et de renvoi 22, 24 d'images des sources de lumière extérieure auxdites unités. Ainsi, les images envoyées vers le combineur 10 présentent une luminosité plus intense et leur netteté est améliorée.

Par ailleurs, tel qu'il apparaît sur la figure 4, le dispositif de projection 20 d'images comprend une pièce de support 25 qui porte les unités de génération et de renvoi 22, 24 des images.

Avantageusement, lesdites unités de génération et de renvoi 22, 24 d'images étant portées par la même pièce de support 25, elles sont orientées l'une par rapport à l'autre de manière optimale sur cette pièce de support 25.

Autrement dit, l'écran 220 et le miroir de repliement 240, par leur seule fixation sur la pièce de support 25, sont inclinés l'un par rapport à l'autre de manière idéale pour créer des images de qualité et pour les réfléchir vers le combineur 10.

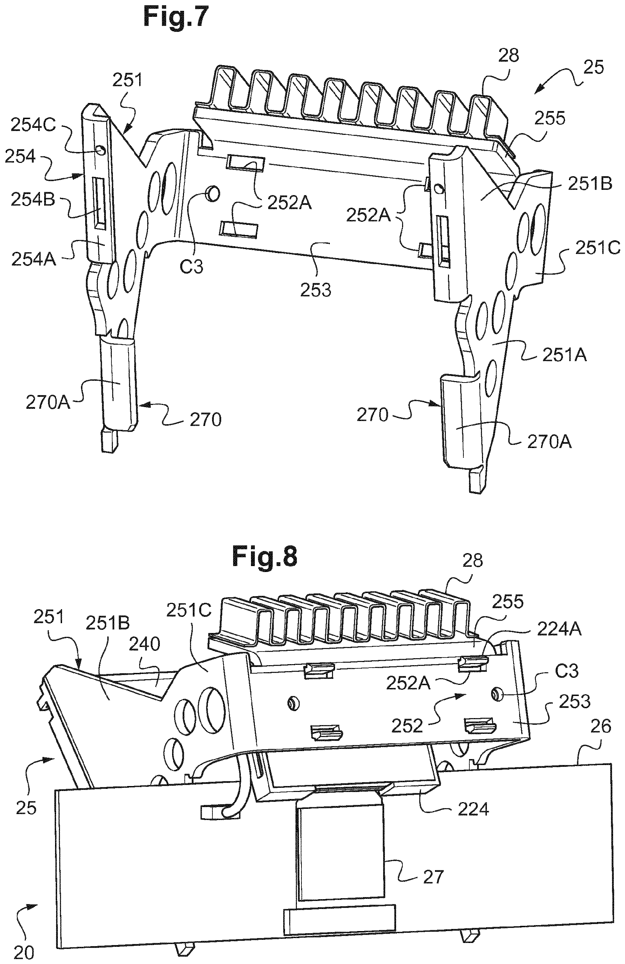

On a représenté plus précisément sur les figures 5 et 6 un premier mode de réalisation de ladite pièce de support 25, et sur les figures 7 et 8 un deuxième mode de réalisation de ladite pièce de support 25.

De manière remarquable, quel que soit le mode de réalisation envisagé, la pièce de support 25 comporte des moyens de support 252 de ladite unité de génération 22 d'images et des moyens de support 254 de ladite unité de renvoi 24 desdites images générées (voir figures 5 et 6).

Plus précisément, la pièce de support 25 comprend deux montants latéraux 251 en miroir l'un par rapport à l'autre, et un montant transversal 253 reliant lesdits montants latéraux 251.

Les montants latéraux 253 présentent chacun une forme de « Y » et comprennent un pied 251A inférieur, un bras avant 251B et un bras arrière 251C.

Ainsi, l'extrémité arrière du bras arrière 251C s'étend en arrière par rapport à l'extrémité arrière du pied 251A, et l'extrémité avant du bras avant 251B s'étend en avant par rapport à l'extrémité avant du pied 251A.

En outre, l'extrémité arrière supérieure du bras arrière 251C, s'étend dans une région globalement inférieure à la région dans laquelle s'étend l'extrémité avant supérieure du bras avant 251B.

Les montants latéraux 251 sont reliés l'un à l'autre au niveau de l'extrémité arrière de leur bras arrière 251C, par le montant transversal 253. Autrement dit, le montant transversal 253 et les montants latéraux 251 la pièce de support 25 sont agencés pour former un « U ».

Le montant transversal 253 comporte lesdits moyens de support 252 de l'unité de génération 22 d'images du dispositif de projection 20 d'images.

Ces moyens de support 252 sont ici quatre fentes 252A rectangulaires adaptées à recevoir les pattes d'encliquetage 224A du réflecteur 224 du module de rétroéclairage 222 (voir figure 6).

Le montant transversal 253 comprend en outre des moyens de centrage C3 de l'unité de génération 22, qui sont ici deux trous circulaires adaptés à correspondre avec les moyens de centrages C1, C2 du support 223 et du réflecteur 224 de ladite unité de génération 22 d'images.

Ainsi, les moyens de centrage C1, C2, C3 étant en correspondance les uns avec les autres, il est possible d'y insérer des pions de centrage, tels que des tiges, de manière que le support 223 et le réflecteur 224 soient alignés lors du montage de l'unité de génération 22 sur la pièce de support 25.

Comme le montre bien la figure 5, en position dans le dispositif de projection 20 d'images, le support 223 des sources de lumière 221 du module de rétroéclairage 222 est pris en sandwich entre le réflecteur 224 et le montant transversal 253, le réflecteur 224 supportant par ailleurs le diffuseur 225 et l'écran 220, de sorte que la pièce de support 25 porte l'unité de génération 22 d'images dans son ensemble.

L'unité de génération 22 d'images est alors portée par le montant transversal 253, et logée entre les montants latéraux 251 de la pièce de support 25.

D'autre part, le bras avant 251B de chaque montant latéral 251 comprend un moyen de support 254 de l'unité de renvoi 24 des images générées.

Plus précisément, le bras avant 251B de chaque montant latéral 251 comprend, à son extrémité avant, une patte 254A (voir figure 5) qui s'étend sur toute la hauteur dudit bras avant 251B.

Ces pattes 254A peuvent par exemple être obtenues par repliement de l'extrémité avant du bras avant 251B, autour d'un axe oblique par rapport à l'axe vertical, vers le montant latéral 251 en regard.

Les pattes 254A s'étendent dans un même plan orthogonal aux plans respectifs dans lesquels s'étendent les montants latéraux 251, et à l'oblique par rapport au plan dans lequel s'étend le montant transversal 253, de manière à ce que l'intersection dudit plan d'extension du montant transversal 253 et dudit plan d'extension des pattes 254A forme un angle aigu

Chaque patte 254A est munie d'une fente 254B rectangulaire adaptée à recevoir une des pattes d'encliquetage 241C du support de fixation 241 de l'unité de renvoi 24 des images.

Chaque patte 254A comporte en outre un trou 254C circulaire prévu pour sécuriser la fixation du miroir de repliement 240 sur la pièce de support 25. Ces trous 254C adaptés à recevoir des rivets ou des boulons sur lesquels on visse un écrou, de manière à éviter que le miroir de repliement 240 ne se détache de la pièce de support 25 lors des éventuelles secousses subies lorsque le véhicule est en fonctionnement.

Les pattes 254A, les fentes 254B, et les trous 254C forment ainsi les moyens de support 254 de l'unité de renvoi 24 des images.

En outre, la pièce de support 25 est adaptée à porter le circuit imprimé 26 d'alimentation et/ou de commande de l'unité de génération 22 d'images.

A cet effet, la pièce de support 25 comporte des moyens de support dudit circuit imprimé 26 de commande.

Le circuit imprimé 26 de commande est porté dans une région inférieure de la pièce de support 25, par rapport aux régions dans lesquelles sont portées les unités de génération et de renvoi 22, 24 d'images.

Ici, le circuit imprimé 26 est porté par les pieds 251A des montants latéraux 251 de la pièce de support 25.

Selon le premier mode de réalisation de la pièce de support, les moyens de support (256, 256A) sont situés à l'avant de la pièce de support 25.

Plus précisément, les moyens de support du circuit imprimé 26 sont situés sur l'extrémité avant du pied 251A de chaque montant latéral 251.

Ces moyens de support sont ici quatre pattes 256, chacune étant munie d'un trou 256A de fixation circulaire (voir figures 4 et 5) adapté à recevoir un moyen de fixation du circuit imprimé 26, tels qu'un boulon muni d'un écrou ou un rivet.

Les pattes 256 sont par exemple obtenues par repliement de portions avant du pied 251A de chaque montant latéral 251, autour d'un axe globalement vertical, vers le montant latéral 251 en miroir.

Selon le deuxième mode de réalisation , non couvert par la présente invention, de la pièce de support 25, les moyens de support (27) sont situés à l'arrière de la pièce de support.

Plus précisément, le connecteur 27 porte le circuit imprimé 26 et forme le moyen de support dudit circuit imprimé (voir figure 8).

De manière avantageuse, la pièce de support 25 permet également de maintenir correctement le connecteur 27 reliant l'écran 220 et le circuit imprimé 26 de commande dudit écran 220.

De manière avantageuse, la pièce de support 25 est adaptée à supporter le câble reliant le circuit imprimé 26 de commande et le circuit imprimé formant le support 223 des sources de lumière 221.

Par ailleurs, la pièce de support 25 est réalisée en une matière rigide de manière à pouvoir supporter sans ployer les différents éléments du dispositif de projection 20 d'images.

Ici, avantageusement, elle est en matière métallique. Ainsi, elle est adaptée à dissiper l'énergie thermique créée au niveau des sources de lumière 221 du module de rétroéclairage 222 de l'unité de génération 22 d'images.

Pour faciliter ladite dissipation d'énergie thermique, la pièce de support 25 peut en outre comporter un moyen de dissipation thermique. Ici, le moyen de dissipation thermique est un radiateur à ailettes 28 métallique fixé sur un retour 255 du montant transversal 253. A titre d'exemple non limitatif, le radiateur 28 est un feuillard plié.

Avantageusement, la pièce de support 25 portant l'unité de génération 22 d'images, l'unité de renvoi 24 desdites images, et le circuit imprimé 26, rend le dispositif de projection 20 d'images particulièrement compact.

Ici, la pièce de support 25 mesure moins de 15 centimètres (cm) selon l'axe vertical, moins de 15 cm selon l'axe longitudinal et moins de 15 cm selon l'axe latéral.

Dans l'exemple de réalisation de l'afficheur tête haute 1 décrit, le combineur 10 est une lame semi-transparente 10.

Elle est ici placée entre le parebrise 2 du véhicule et les yeux du conducteur.

En outre, de façon avantageuse, la lame semi-transparente 10 est ici rétractable dans un logement de protection 30 dudit dispositif de projection 20 d'images (voir figure 3).

Plus précisément, la lame semi-transparente 10 peut adopter deux positions distinctes : une position déployée dans laquelle elle fait saillie par rapport par rapport à une partie supérieure dudit logement de protection 30, et une position rétractée dans laquelle elle est logée dans une partie inférieure du logement de protection 30.

Plus précisément, en position rétractée, elle est placée entre une paroi interne dudit logement de protection 30 et ladite pièce de support 25.

Ainsi, en position rétractée, la lame semi-transparente 10 est intégralement logée dans le logement de protection 30, de préférence dans une région arrière dudit logement de protection 30.

De manière à pouvoir passer facilement de la position rétractée à la position déployée, la lame semi-transparente 10 est montée sur des moyens de déplacement 11.

En variante, on pourrait prévoir que le parebrise du véhicule joue le rôle de combineur de sorte que la lame semi-transparente pourrait être omise (ainsi que les moyens de déplacement 11).

Le logement de protection 30 (voir figures 2 et 3) est adapté à loger le dispositif de projection 20.

Ce logement de protection 30 est ici intégré au tableau de bord du véhicule.

Il comprend (voir figure 2) une partie inférieure qui forme un caisson 31, et une partie supérieure qui forme un couvercle 32.

Ici, le caisson 31 comprend un fond 31A à partir duquel s'élève une paroi latérale 31B qui débouche sur une ouverture. Cette ouverture est adaptée à recevoir par emboîtement le couvercle 32, de manière à fermer le caisson 31.

De manière avantageuse, la pièce de support 25 supporte tous les éléments du dispositif de projection 20, ce qui facilite le montage dudit dispositif de projection 20 d'images dans le logement de protection 30.

En effet, seule la pièce de support 25 nécessite d'être fixée dans le logement de protection 30.

A cet effet, la pièce de support 25 comporte des moyens de fixation 260 ; 270 au logement de protection 30.

Selon le premier mode de réalisation de la pièce de support 25, il est prévu de moyens de fixation 260 inférieurs, de sorte que la pièce de support est adaptée à être fixée dans le fond 31A du caisson 31.

Plus précisément, les moyens de fixation 260 sont ici deux pattes horizontales 260A (voir figure 5) prévues sur les montants latéraux 251 de la pièce de support 25, et adaptées à être fixées dans le fond dudit logement de protection 30.

Ces pattes horizontales 260A sont par exemple obtenues par repliement d'une portion inférieure du pied 251A de chaque montant latéral 251, autour d'un axe longitudinal, vers le montant latéral 251 en miroir.

En outre, chaque patte horizontale 260A comprend ici un trou 260B circulaire adapté à recevoir un moyen de fixation, tel qu'un boulon muni d'un écrou ou un rivet, de manière à solidariser ladite pièce de support 25 au logement de protection 30.

Selon le premier mode de réalisation, chaque patte horizontale 260A est également munie d'un picot 260C adapté à s'introduire dans une encoche prévue sur un bord inférieur du circuit imprimé 26. Ce picot 260C permet de retenir en partie le circuit imprimé 26 de sorte que la masse dudit circuit imprimé 26 ne soit pas intégralement supportée par les moyens de support 256 dudit circuit imprimé 26.

En variante de ce premier mode de réalisation, on pourrait prévoir que les moyens de fixation soient des pattes horizontales munies d'un bourrelet faisant saillie sur leur face inférieure. Ce bourrelet serait adapté à être clipsé en force dans une encoche prévue à cet effet sur une face intérieure du fond du caisson du logement de protection.

Selon le deuxième mode de réalisation de la pièce de support 25, il est prévu de moyens de fixation 270 avant, de sorte que ladite pièce de support 25 est adaptée à être fixée sur la paroi latéral 31B avant du caisson 31.

Plus précisément, les moyens de fixation 270 sont ici deux pattes verticales 270A adaptées à coulisser dans une glissière prévue à l'intérieur de la paroi latérale 31B avant du caisson 31 dudit logement de protection 30 (voir figure 7).

Les pattes verticales 270A sont ici prévues à l'avant du pied 251A de chaque montant latéral 251 de la pièce de support 25.

Elles sont par exemple obtenues par repliement de portions avant dudit pied 251A de chaque montant latéral 251 autour d'un axe globalement vertical, vers le montant latéral 251 en miroir.

Par ailleurs, quel que soit le mode de réalisation envisagé, la pièce de support 25 est adaptée à maintenir l'unité de génération 22 d'images à distance des parois 31A, 31B, 32 du logement de protection 30 du dispositif de projection 20 d'images.

Autrement dit, l'unité de génération 22 d'images n'est pas directement en contact avec le fond 31A, ou la paroi latérale 31B du caisson 31, ou le couvercle 32 du logement de protection 30.

Quel que soit le mode de réalisation envisagé de la pièce de support 25, celle-ci est fixée dans une région avant du logement de protection 30 de sorte que de l'espace soit libéré dans une région arrière dudit logement de protection 30.

Par ailleurs, le couvercle 32 du logement de protection 30 comprend une première ouverture 34 adaptée à laisser passer les images envoyées par l'unité de renvoi 24 des images vers le combineur 10, et une deuxième ouverture 36 adaptée à laisser passer la lame semi-transparente 10 pour qu'elle fasse saillie par rapport à la face supérieure de ce couvercle 32.

Le logement de protection 30 comprend en outre un cache 33 rapporté sur une portion de la deuxième ouverture 36 du couvercle 32 (figure 2) de manière que lorsque la lame semi-transparente 10 est en position déployée, la deuxième ouverture 36 du logement de protection 30 soit totalement obstruée, et lorsque la lame semi-transparente 10 est en position rétractée, seule une partie de la deuxième ouverture 36 soit ouverte sur l'extérieur.

D'autre part, le logement de protection 30 est ici réalisé en une matière plastique rigide et opaque.

Ainsi, avantageusement, le logement de protection 30 permet de protéger et de cacher les éléments optiques du dispositif de projection 20 d'images. Il permet également de confiner le dispositif de projection 20 d'images pour l'isoler de toute source de lumière parasite qui pourrait nuire à son bon fonctionnement.

Dans la partie qui suit est présenté un exemple de procédé de fabrication d'un dispositif de projection 20 pour afficheur tête haute 1 comme décrit ci-dessus.

Selon ce procédé de fabrication :
a) on fixe le film protecteur 43 transparent sur la fenêtre de sortie 40C d'images du conduit 40 de protection,
b) on assemble ledit conduit 40 de protection d'un côté à l'unité de génération 22 d'images dudit dispositif de projection 20 d'images, et de l'autre à l'unité de renvoi 24 d'images dudit dispositif de projection 20 d'images.

A l'étape a), la fixation du film protecteur 43 sur la fenêtre de sortie 40C du conduit 40 est réalisée par soudure ultra-son.

Ainsi, avantageusement, le film protecteur est fixé de façon parfaitement jointive au conduit 40.

En variante, on pourrait envisager de coller le film protecteur sur les bords de la fenêtre de sortie du conduit.

Ici, le film protecteur 43 est plus précisément soudé à la deuxième pièce 42 principale du conduit 40, au niveau de la fenêtre de sortie 40C dudit conduit 40.

Cette fixation est facilitée car elle est réalisée sur ladite deuxième pièce 42 du conduit 40 qui est relativement petite et maniable.

Ladite deuxième pièce 42, munie du film protecteur 43, est ensuite assemblée à la première pièce 41 pour former ledit conduit 40.

Ici, les première et deuxième pièces 41, 42 du conduit 40 sont assemblées au niveau de leurs ouvertures intermédiaires 41A, 42A respectives.

Cet assemblage est par exemple réalisé par soudage ultra-son. En variante, cet assemblage peut être réalisé en rivetant ensemble les rebords des ouvertures intermédiaires des première et deuxième pièces.

Par ailleurs, on considère que l'unité de génération 22 d'images et l'unité de renvoi 24 d'images ont été fabriquées dans une étape préalable à l'étape b) du procédé.

Selon une première variante du procédé de fabrication, on considère que les unités de génération et de renvoi 22, 24 d'images sont fixées indépendamment dans le dispositif de projection 20 d'images.

Selon cette variante, à l'étape b), l'unité de renvoi 24 étant pré-fabriquée, on considère que le miroir de repliement 240 est déjà fixé sur le support de fixation 241.

On place alors la face réfléchissante du miroir de repliement 240 en face de l'ouverture avant 40B du conduit 40 assemblé et muni du film protecteur 43.

Ledit conduit 40 est ensuite fixé sur la face arrière dudit support de fixation 241 de l'unité de renvoi 24 des images.

L'unité de génération 22 d'images étant également pré-fabriquée, on considère que cette unité de génération 22 est fixée dans le dispositif de projection d'images.

On place alors l'écran 220 de l'unité de génération 22 d'images en face de l'ouverture arrière 40A du conduit 40, ledit conduit 40 étant assemblé, muni du film protecteur 43, et déjà fixé à l'unité de renvoi 24.

Ledit conduit 40 est alors fixé contre ladite unité de génération 22 d'images par des moyens de fixation quelconque.

L'unité de renvoi 24 des images est ainsi fixée indirectement sur l'unité de génération 22 d'images, au moyen du conduit 40 de protection.

Selon une deuxième variante préférentielle du procédé, à l'étape b), les unités de génération et de renvoi 22, 24 d'images sont fixées sur la pièce de support 25.

Selon l'invention, quel que soit le mode de réalisation de la pièce de support 25, celle-ci est fabriquée d'un seul tenant, par repliement et découpage d'une plaque métallique suffisamment rigide.

L'unité de génération 22 est d'abord fixée sur la pièce de support 25.

Pour ce faire, des pions de centrage sont placés dans les trous C3 du montant transversal 253 de la pièce de support 25, et les trous C1 du support 223 des sources de lumière 221 sont également placés sur ces pions de centrage. Les trous C2 du réflecteur 224 sont également placés sur ces pions de centrage et le réflecteur 224 est alors clipsé dans les encoches 252A du montant transversal 253 de la pièce de support 25.

Par ailleurs, le conduit 40, assemblé et muni du film protecteur 43 suite à l'étape a) du procédé, est fixé à l'unité de renvoi 24 des images.

Pour ce faire, ledit conduit 40 est clipsé sur la face arrière du support de fixation 241 de l'unité de renvoi 24 des images.

Ensuite, l'unité de renvoi 24 d'images est fixée sur la pièce de support 25.

Pour ce faire, le support de fixation 241 de l'unité de renvoi 24 des images est fixé sur la pièce de support 25.

Plus précisément, les autres pattes d'encliquetage (non visible sur les figures) sont insérées dans les fentes 254B prévues à cet effet sur la pièce de support 25.

Ainsi, le conduit 40 est fixé, d'un côté, à l'unité de renvoi 24 d'images, et est maintenu en force, de l'autre côté, contre le cache 226 de l'unité de génération 22 d'images, de sorte qu'il forme une enceinte close.

L'opérateur fixe également le circuit imprimé 26 sur la pièce de support 25.

L'opérateur prévoit ensuite de câbler les éléments électroniques entre eux. Par exemple, il connecte le circuit imprimé 26 et l'écran 220 à l'aide du connecteur 27.

Dans une étape postérieure à l'étape b), la pièce de support 25, sur laquelle sont fixées les unités de génération et de renvoi 22, 24 d'images reliées par le conduit 40 de protection, est fixée dans le logement de protection 30 dudit dispositif de projection 20.

En fonction du mode de réalisation de la pièce de support 25, cette fixation peut se faire par insertion des pattes verticales 270A de la pièce de support 25 dans les glissières prévues dans la paroi latérale 31B du caisson 31 du logement de protection 30, ou par fixation des pattes horizontales 260A dans le fond 31A du caisson 31 du logement de protection 30.

Ainsi, grâce à la pièce de support 25, l'assemblage du dispositif de projection 20 et sa fixation dans le logement de protection 30 sont facilités.

## Revendications

1. Dispositif de projection (20) d'images pour afficheur tête haute (1) comprenant :
- une unité de génération (22) d'images, et
- une unité de renvoi (24) des images générées,
**caractérisé en ce qu'**il comprend en outre une pièce de support (25) comportant des moyens de support (252) de ladite unité de génération (22) d'images et des moyens de support (254) de ladite unité de renvoi (24) des images générées, ladite pièce de support (25) étant métallique, d'un seul tenant, et comprenant deux montants latéraux (251) en miroir l'un par rapport à l'autre, un montant transversal (253) reliant lesdits montants latéraux (251), la pièce de support (25) comportant en outre **un circuit imprimé de commande (26) fixé** sur des moyens de support (256) de ladite unité de génération (22) d'images, les moyens de support (256) étant portés par des pieds (251 A) des montants latéraux (251) de la pièce de support (25).

2. Dispositif de projection (20) d'images selon la revendication 1, adaptée à maintenir ladite unité de génération (22) d'images à distance des parois d'un logement de protection (30) dans lequel est logé ledit dispositif de projection (20) d'images.

3. Dispositif de projection (20) d'images selon l'une des revendications 1 à 2, comportant en outre un moyen de dissipation thermique (28).

4. Dispositif de projection (20) d'images selon l'une des revendications 1 à 3, comportant des moyens de fixation (260 ; 270) dans un logement de protection (30) dudit dispositif de projection (20) d'images.

5. Dispositif de projection (20) d'images selon la revendication 4, dans laquelle lesdits moyens de fixation (270) comprennent deux pattes verticales (270A) adaptées à coulisser dans une glissière dudit logement de protection (30) du dispositif de projection (20) d'images.

6. Dispositif de projection (20) d'images selon la revendication 4, dans laquelle les moyens de fixation (260) comprennent deux pattes horizontales (260A) adaptées à être fixées dans le fond (31A) dudit logement de protection (30) du dispositif de projection (20) d'images.

7. Afficheur tête haute (1) comprenant un dispositif de projection (20) d'images selon l'une des revendications précédentes, dans lequel l'unité de renvoi (24) d'images est adaptée à renvoyer en direction d'un combineur (10) les images générées par l'unité de génération (22) d'images.

8. Afficheur tête haute (1) selon la revendication 7, dans lequel le combineur (10) est une lame semi-transparente rétractable dans un logement de protection (30) dudit dispositif de projection (20) d'images.

9. Afficheur tête haute (1) selon la revendication 7, dans lequel le combineur (10) est adapté à adopter une position déployée dans laquelle il fait saillie par rapport par rapport audit logement de protection (30) du dispositif de projection (20) d'images, et une position rétractée dans laquelle il est placé entre une paroi dudit logement de protection (30) du dispositif de projection (20) d'images et ladite pièce de support (25).

## Patentansprüche

1. Bildprojektionsvorrichtung (20) für Head-up-Display (1), umfassend:
- eine Bilderzeugungseinheit (22) und
- eine Einheit zum Umlenken (24) der erzeugten Bilder, **dadurch gekennzeichnet, dass** sie ferner ein Halteteil (25) umfasst, das Mittel zum Halten (252) der Bilderzeugungseinheit (22) und Mittel zum Halten (254) der Einheit zum Umlenken (24) der erzeugten Bilder aufweist, wobei das Halteteil (25) metallisch aus einem Stück ist und zwei Seitenteile (251), die spiegelbildlich zueinander angeordnet sind, ein Querteil (253), das die Seitenteile (251) verbindet, umfasst, wobei das Halteteil (25) ferner eine Steuerplatine (26) aufweist, die auf Haltemitteln (256) der Bilderzeugungseinheit (22) befestigt ist, wobei die Haltemittel (256) von Füßen (251 A) der Seitenteile (251) des Halteteils (25) getragen werden.

2. Bildprojektionsvorrichtung (20) nach Anspruch 1, die geeignet ist, die Bilderzeugungseinheit (22) in einem Abstand zu den Wänden einer Schutzaufnahme (30) zu halten, in der die Bildprojektionsvorrichtung (20) aufgenommen ist.

3. Bildprojektionsvorrichtung (20) nach einem der Ansprüche 1 bis 2, ferner aufweisend ein Wärmeableitungsmittel (28).

4. Bildprojektionsvorrichtung (20) nach einem der Ansprüche 1 bis 3, aufweisend Mittel zur Befestigung (260; 270) in einer Schutzaufnahme (30) der Bildprojektionsvorrichtung (20).

5. Bildprojektionsvorrichtung (20) nach Anspruch 4, wobei die Befestigungsmittel (270) zwei vertikale Laschen (270A) umfassen, die geeignet sind, in einer Gleitführung der Schutzaufnahme (30) der Bildprojektionsvorrichtung (20) zu gleiten.

6. Bildprojektionsvorrichtung (20) nach Anspruch 4, wobei die Befestigungsmittel (260) zwei horizontale Laschen (260A) umfassen, die geeignet sind, im Boden (31A) der Schutzaufnahme (30) der Bildprojektionsvorrichtung (20) befestigt zu sein.

7. Head-up-Display (1) umfassend eine Bildprojektionsvorrichtung (20) nach einem der vorhergehenden Ansprüche, wobei die Bildumlenkeinheit (24) geeignet ist, die Bilder, die von der Bilderzeugungseinheit (22) erzeugt werden, in Richtung eines Kombinators (10) umzulenken.

8. Head-up-Display (1) nach Anspruch 7, wobei der Kombinator (10) eine halbtransparente Scheibe ist, die in eine Schutzaufnahme (30) der Bildprojektionsvorrichtung (20) einfahrbar ist.

9. Head-up-Display (1) nach Anspruch 7, wobei der Kombinator (10) geeignet ist, eine ausgefahrene Position, in welcher er bezogen auf bezogen auf die Schutzaufnahme (30) der Bildprojektionsvorrichtung (20) hervorsteht, und eine eingefahrene Position, in welcher er zwischen einer Wand der Schutzaufnahme (30) der Bildprojektionsvorrichtung (20) und dem Halteteil (25) platziert ist, einzunehmen.

## Claims

1. Image projection device (20) for head-up display (1) comprising:
- an image generation unit (22), and
- a unit (24) for returning the generated images, **characterized in that** it further comprises a support piece (25) comprising support means (252) for said image generation unit (22) and support means (254) for said unit (24) for returning the generated images, said support piece (25) being metallic, made of a single piece, and comprising two lateral uprights (251) mirroring one another, a transverse upright (253) linking said lateral uprights (251), the support piece (25) further comprising a control printed circuit (26) fixed onto the support means (256) for said image generation unit (22), the support means (256) being supported by feet (251A) of the lateral uprights (251) of the support piece (25) .

2. Image projection device (20) according to Claim 1, suitable for keeping said image generation unit (22) at a distance from the walls of a protection housing (30) in which said image projection device (20) is housed.

3. Image projection device (20) according to either of Claims 1 and 2, further comprising a heat sink means (28) .

4. Image projection device (20) according to one of Claims 1 to 3, comprising fixing means (260; 270) for fixing said image projection device (20) in a protection housing (30).

5. Image projection device (20) according to Claim 4, wherein said fixing means (270) comprise two vertical lugs (270A) suitable for sliding into a runner of said protection housing (30) of the image projection device (20).

6. Image projection device (20) according to Claim 4, wherein the fixing means (260) comprise two horizontal lugs (260A) suitable for being fixed in the bottom (31A) of said protection housing (30) of the image projection device (20).

7. Head-up display (1) comprising an image projection device (20) according to one of the preceding claims, wherein the unit (24) for returning images is adapted to return the images generated by the image generation unit (22) towards a combiner (10).

8. Head-up display (1) according to Claim 7, wherein the combiner (10) is a semi-transparent plate that can be retracted into a protection housing (30) of said image projection device (20).

9. Head-up display (1) according to Claim 7, wherein the combiner (10) is adapted to adopt a deployed position in which it protrudes with respect to with respect to said protection housing (30) of the image projection device (20), and a retracted position in which it is placed between a wall of said protection housing (30) of the image projection device (20) and said support piece (25).
